# EUROPÄISCHE PATENTANMELDUNG

(11) **EP 0 892 358 A2**
(43) Veröffentlichungstag der Anmeldung: **20.01.1999**
(21) Anmeldenummer: 98111399.6
(22) Anmeldetag: 20.06.1998
(51) Int. Cl.: G06K 7/08

(54) **Verfahren zur Datenübertragung zwischen einem Schreib-Lesegerät und einem Transponder**

(30) Priorität: 18.07.1997 DE 19731035
(71) Anmelder: Stobbe, Anatoli, 30890 Barsinghausen (DE)
(72) Erfinder: Stobbe, Anatoli, 30890 Barsinghausen (DE); Scheffler, Hartmut, 31542 Bad Nenndorf (DE)
(74) Vertreter: Thömen, Uwe, Dipl.-Ing.

(57) **Zusammenfassung**

Es wird ein Verfahren zur Datenübertragung zwischen einem Schreib-Lesegerät und einem Transponder beschrieben.

Die Datenübertragung erfolgt durch Feldstärkeänderung eines elektromagnetischen oder magnetischen Feldes und Auswertung der Zeiten zwischen aufeinanderfolgenden Feldstärkeänderungen. Zumindest zu Beginn einer Datenübertragung wird eine systematische Zeitabweichung vom Sollwert, die beim Durchlaufen einer Schaltschwelle der Feldstärkeänderungen auftritt, ermittelt. Daraus wird ein Korrekturwert gewonnen und die anschließend erfaßten Zeiten werden um den Korrekturwert verändert.

## Beschreibung

Die Erfindung betrifft ein Verfahren zur Datenübertragung zwischen einem Schreib-Lesegerät und einem Transponder nach dem Oberbegriff des Anpruchs 1.

Systeme aus Schreib-Lesegeräten und Transpondern dienen zur berührungslosen Identifikation von Gegenständen, Personen und Tieren. Der Transponder ist ein Datenspeicher, dessen Informationen mit dem Schreib-Lesegerät drahtlos ausgelesen und verändert werden können. Besonders verbreitet sind inzwischen passive Transpondersysteme, bei denen der Transponder gleichzeitig vom Leseqerät mit Energie versorgt wird, so daß keine Energiequelle im Transponder enthalten ist.

Die Energie- und Informationsübertragung erfolgt induktiv. Zur Steigerung der Effektivität des Transponders und des Lesegerätes werden auf beiden Seiten Schwingkreise verwendet, deren Spulen die Kopplung herstellen. Die Datenübertragung vom Lesegerät zum Transponder wird durch Feldstärkeänderung und Auswertung der Zeiten zwischen aufeinanderfolgenden Feldstärkeänderungen, als Impulszeiten bezeichnet, vorgenommen.

Bei vielen Anwendungen solcher Systeme wird eine möglichst große Reichweite gefordert. Diese läßt sich nur durch ein starkes Feld des Schreib-Lesegerätes erreichen. Wird nun der Transponder direkt vor dem Schreib-Lesegerät positioniert, wird er mit Energie überversorgt und an seinem Schwingkreis kann sich eine sehr hohe Spannung einstellen. Um eine Zerstörung des Transponders bei zu großer Schwingkreisspannung zu verhindern, wird am Transponder die Amplitude begrenzt.

Es hat sich gezeigt, daß die erfaßten Impulszeiten von der Kopplung der Schwingkreise des Schreib-Lesegerätes und des Transponders, den Parametern der Schwingkreise und der Sendeleistung des Schreib-Lesegerätes abhängig sind. Daher ist eine feste Kompensation der Veränderungen bzw. Verzerrungen weder auf Seiten des Schreib-Lesegerätes noch auf Seiten des Transponders möglich.

Um sicherzustellen, daß die möglichen Verzerrungen den Informationsinhalt der übertragenen Daten nicht verändern, muß bei der Übertragung von zwei logischen Zuständen die Soll-Differenz der Impulszeiten der beiden Zustände größer als die maximal mögliche Abweichung der Zeitpunkte der Feldstärkeänderungen von Sollwerten gewählt werden. Dies führt zu einer Verlängerung der Impulszeiten und damit als Konsequenz zu einer Reduktion der möglichen Datenrate, die sonst nur von der kleinsten erkennbaren Differenz zwischen den verschiedenen Impulslängen bestimmt wird.

Der Erfindung liegt die Aufgabe zugrunde, ein Verfahren zur Datenübertragung zwischen einem Schreib-Lesegerät und einem Transponder dahingehend zu verbessern, daß trotz der Einflüsse der Kopplung der Schwingkreise des Schreib-Lesegerätes und des Transponders, der Parametern der Schwingkreise und der Sendeleistung des Schreib-Lesegerätes auf die Impulslängen eine Erhöhung der Datenrate ermöglicht wird.

Diese Aufgabe wird bei einem Verfahren nach dem Oberbegriff des Anspruchs 1 durch die im kennzeichnenden Teil angegebenen Merkmale gelöst. Weiterbildungen und vorteilhafte Ausgestaltungen ergeben sich aus den Unteransprüchen.

Die erfindungsgemäße Lösung wurde aufgrund folgender Überlegungen gefunden:

Systembedingt wird eine gewisse Zeit benötigt, um die Feldstärke bzw. Spannung an den Schwingkreisen vom Minimalwert bis zum Maximalwert und umgekehrt zu verändern. Durch die Begrenzung der Amplitude am Schwingkreis des Transponders kann nicht mehr festgestellt werden, wann tatsächlich das Maximum der Feldstärke erreicht wird.

Bei fester Kopplung der Schwingkreise und damit hoher maximaler Feldstärke an der Transponderspule setzt die Begrenzung wesentlich vor Erreichen der maximalen Feldstärke ein. Die Impulsflanke wird zu früh erkannt. Ebenso wird eine Impulsflanke bei einer Reduktion der Feldstärke verspätet registriert. Bei loser Kopplung und niedriger maximaler Feldstärke an der Transponderspule setzt die Begrenzung erst kurz vor Erreichen der maximalen Feldstärke ein. Die Impulsflanke wird also erst verzögert erkannt. Umgekehrt wird eine Impulsflanke bei Reduktion der Feldstärke früher registriert. Diese Einflüsse sind Ursache dafür, daß trotz konstanter Impulszeiten bei der Kodierung und Modulation des vom Schreib-Lesegerät ausgestrahlten Trägers die vom Transponder ermittelten Zeiten zwischen aufeinanderfolgenden Feldstärkeänderungen variieren.

Allerdings verhalten sich die genannten Parameter, die zu variablen Impulszeiten bei der Dekodierung der Daten führen, systematisch. Wenn die vom Transponder ermittelten Impulszeiten daher von Sollwerten abweichen, sind sie alle entweder um ein gleiches Maß zu lang oder zu kurz. Außerdem sind die genannten Parameter im Vergleich zur Datenrate verhältnismäßig träge, d. h. sie verändern sich nur langsam und weisen unter praktischen Betriebsbedingungen relativ hohe Zeitkonstanten auf.

Aufgrund dieser Erkenntnisse gelingt es, die Abweichungen der vom Transponder ermittelten Impulszeiten von Sollwerten zu kompensieren. Gleichzeitig erhöht sich dadurch die Zuverlässigkeit, mit der unterschiedliche logische Zustände, dargestellt durch unterschiedlich lange Impulszeiten, eindeutig erkannt werden können. Der sonst für eine zuverlässige Unterscheidung notwendige zeitliche Sicherheitsabstand zu feldstärkeabhängigen Variationen der Impulszeiten läßt sich reduzieren. Daher wird es möglich, mit kürzeren Impulszeiten zu arbeiten und so mehr Impulse pro Zeiteinheit zu übertragen.

Vorzugsweise wird zu Beginn einer Datenübertragung vom Schreib-Lesegerät ein durch zwei Feldstärkeänderungen begrenzter Kalibrierimpuls vorgegebener zeitlicher Länge zum Transponder übertragen. Vom Transponder wird dann die Zeitspanne zwischen den Durchläufen der Schaltschwellen der Feldstärkeänderungen ermittelt. Die Differenz zwischen der gemessenen Zeitspanne und dem Sollwert bildet dann den Korrekturwert oder ein Maß für den Korrekturwert.

Durch den speziellen Kalibrierimpuls vor der Datenübertragung kann die Kompensation bereits zu Beginn der Datenübertragung durchgeführt werden. Da die Übertragung des Kalibrierimpulses unter den gleichen Betriebsbedingungen wie die nachfolgende Datenübertragung stattfindet, ist die ermittelte Abweichung vom Sollwert als Maß für die Kompensation bei der nachfolgenden Datenübertragung mit hoher Genauigkeit anwendbar.

Zusätzlich kann auch während der Datenübertragung die systematische Zeitabweichung vom Sollwert, die beim Durchlaufen einer Schaltschwelle der Feldstärkeänderungen auftritt, ermittelt werden und der jeweils zuvor gewonnene Korrekturwert aktualisiert werden.

Dann ist es möglich, die Kompensation nachzuführen, wenn z. B. die Kopplung zwischen Transponder und Schreib-Lesegerät verändert wird.

Bei der Übertragung binärer Daten, bei denen zwei unterschiedliche logische Zustände durch zwei unterschiedliche Zeitspannen zwischen zwei Feldstärkeänderungen dargestellt werden, können Zeitfenster auf Feldstärkeänderungen überwacht werden und in Abhängigkeit desjenigen Zeitfensters, in das eine Feldstärkeänderungen fällt, können die Korrekturwerte bestimmt werden.

Bei der Auswertung müssen nur logische Zustände unterschieden werden, so daß sich diese Lösung besonders für digitale Signalverarbeitung anbietet.

Vorzugsweise werden die Zeitfenster nach den mit vorangehenden Korrekturwerten bewerteten voraussichtlichen Feldstärkeänderungen bemessen.

Ausgehend von der Überlegung, daß die Schaltschwellen für die Feldstärkeänderungen zeitlich nur relativ langsam driften, wird es für ausreichend erachtet, auch eine Kompensation entsprechend langsam und in kleinen Schrittweiten durchzuführen. Da somit nur die Tendenz einer Drift bekannt sein muß, reicht es aus, den jeweils vorangehenden Korrekturwert als Basis für die Berechnung eines aktualisierten Korrekturwertes zu verwenden.

Veränderte aktualisierte Korrekturwerte werden zweckmäßig aus dem jeweils vorangegangenen Korrekturwert und einem festen Zeitwert gebildet, der zum vorangegangenen Korrekturwert addiert oder davon subtrahiert wird.

Bei dieser Lösung wird nur wenig Speicherplatz für die Korrekturwerte benötigt. Vereinzelt auftretende Störungen bei der Datenübertragung führen zwar zu falschen Korrekturwerten, allerdings sind die Änderungen so gering, daß sie zu keinen plötzlichen Ausreißern bei den Korrekturwerten führen. Außerdem werden falsche Korrekturwerte bei ungestörter Übertragung anschließend wieder ausgeglichen.

Bei einer praktischen Ausgestaltung werden drei Zeitfenster gebildet, deren Gesamtbreite kleiner oder gleich der Impulsdauer der logischen Zustände ist. Dabei sind die Grenzen eines mittleren Zeitfensters durch zulässige Toleranzwerte der Impulszeiten gebildet, die symmetrisch zu dem voraussichtlichen Zeitpunkt der Feldstärkeänderung festgelegt werden. Zwei weitere Zeitfenster werden vor und nach dem mittleren Zeitfenster angelegt, wobei bei einer im mittleren Zeitfenster eintretenden Feldstärkeänderung der vorangegangene Korrekturwert beibehalten wird. Bei einer in einem der anderen Zeitfenster eintretenden Feldstärkeänderung wird der Korrekturwert erhöht oder erniedrigt.

Bei dieser Lösung erfolgt eine Auswertung der Feldstärkeänderung nur, wenn diese in eines der Zeitfenster fällt. Durch das mittlere Zeitfenster wird erreicht, daß bei nur geringfügigen Abweichungen innerhalb eines Toleranzbereichs keine Änderung der Korrekturwerte erfolgt. Bei Verlassen des Toleranzbereichs und Auftreten der Feldstärkeänderung in einem der beiden benachbarten Fenster kann dann der Korrekturwert stärker geändert werden, so daß eine schnelle Nachregelung möglich wird.

Bei einer einfacheren Lösung können lediglich zwei Zeitfenster gebildet werden, deren Gesamtbreite kleiner oder gleich der Impulsdauer der logischen Zustände ist. Als Grenze der beiden Zeitfenster wird der voraussichtliche Zeitpunkt einer Feldstärkeänderung festgelegt. Je nach Zeitfenster, in das die Feldstärkeänderung fällt, wird der Korrekturwert entweder erhöht oder erniedrigt.

Bei dieser Lösung wird der Korrekturwert jedesmal geändert. Bei konstanten Übertragungsparametern würden die Korrekturwerte dann zwischen zwei Werten pendeln. Dafür ist die Lösung schaltungstechnisch oder programmtechnisch einfach zu realisieren. Wenn die Änderungsschritte klein bemessen werden, machen sich einzelne Änderungsschritte noch nicht störend bemerkbar.

Nachfolgend wird die Erfindung anhand der Zeichnung erläutert. In dieser zeigen:
- Fig. 1: ein Blockschaltbild eines Schreib-Lesegerätes und eines Transponders, deren Schwingkreisspulen induktiv gekoppelt sind,
- Fig. 2: ein Zeitdiagramm, welches den Spannungsverlauf an der Schwingkreisspule des Transponders darstellt,
- Fig. 3: das gleiche Zeitdiagramm nach Fig. 2, jedoch mit einer Spannungsbegrenzung,
- Fig. 4: ein Zeitdiagramm mit einer Auswertung der Impulslänge,
- Fig. 5: ein Zeitdiagramm mit einer Darstellung unterschiedlicher logischer Zustände und
- Fig. 6: ein Zeitdiagramm mit Zeitfenstern zur Auswertung von Feldstärkeänderungen.

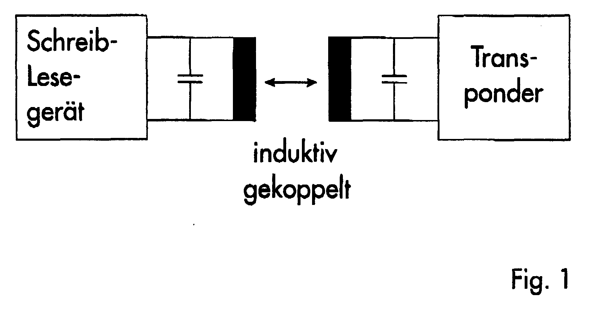

Fig. 1 zeigt ein Blockschaltbild eines Schreib-Lesegerätes und eines Transponders mit Schwingkreisen, die auf die Trägerfrequenz des vom Schreib-Lesegerät ausgestrahlten Trägers abgestimmt sind. Deren Schwingkreisspulen sind induktiv gekoppelt. Die Kopplung ist bei paralleler Ausrichtung und kurzer Entfernung sehr fest und nimmt mit zunehmendem Abstand und/oder gegenseitiger Verdrehung ab. Der Transponder umfaßt einen Spannungsbegrenzer, wodurch der Maximalwert der Feldstärke nicht mehr in jedem Fall mit der maximalen Schwingkreisspannung identisch ist. Dieser Spannungsbegrenzer kann gleichzeitig zur Bildung einer Schaltschwelle zur Erkennung von Feldstärkeänderungen ausgenutzt werden. Es ist aber auch möglich, den Spannungsbegrenzer nur als Schutzschaltung zu betreiben und zusätzlich einen Spannungskomparator vorzusehen, der eine Schaltschwelle zur Erkennung von Feldstärkeänderungen unabhängig festlegt. Diese Schaltschwelle muß allerdings kleiner oder gleich dem Wert des Spannungsbegrenzers sein.

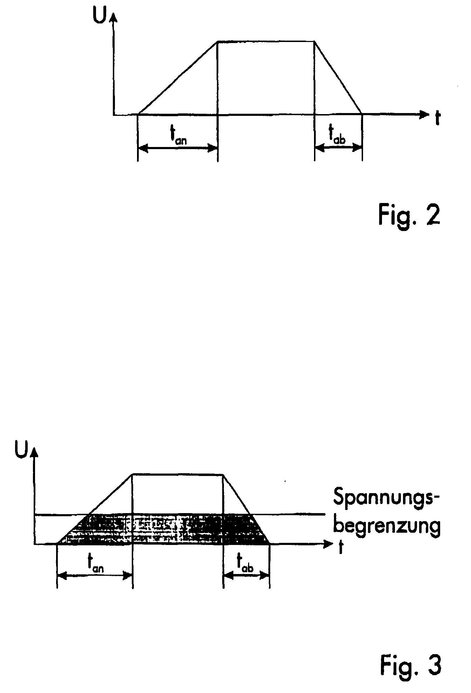

Fig. 2 zeigt ein Zeitdiagramm, welches den Spannungsverlauf an der Schwingkreisspule des Transponders darstellt. Selbst wenn der Sender im Schreib-Lesegerät getastet wird, also nur zwischen den Zuständen "an" und "aus" wechselt, steigt und fällt die Schwingkreisspannung an der Schwingkreisspule des Schreib-Lesegerätes und des Transponders nur allmählich. Die Anstiegszeit vom Minimalwert auf den Maximalwert ist mit tₐₙ und die Abfallzeit vom Maximalwert auf den Minimalwert mit t_{ab} bezeichnet. Die endlichen Flankensteilheiten ergeben sich zwangsläufig aus der begrenzten Bandbreite eines Schwingkreises und sind abhängig von dessen Kreisgüte.

Fig. 3 zeigt das gleiche Zeitdiagramm nach Fig. 2, jedoch mit Spannungsbegrenzung. Durch einen Spannungsbegrenzer kann nicht der Zeitpunkt des Erreichens und Verlassens des absoluten Maximum eines Impulses detektiert werden, sondern nur der Zeitpunkt, in dem die Feldstärkeänderung bzw. Spannungsänderung den durch den Spannungsbegrenzer vorgegebenen Maximalwert erreicht bzw. unterschreitet oder eine feste Schaltschwelle eines Spannungskomparators durchläuft. Unter der Annahme, daß die Anstiegszeit tₐₙ und die Abfallzeit t_{ab} jeweils weitgehend konstant sind, die Schaltschwelle ebenfalls konstant ist, aber das Maximum des Impulses schwanken kann, ergeben sich unterschiedliche Flankensteilheiten der Anstiegs- und Abfallflanken der Impulse. Dies führt zu unterschiedlichen Zeitpunkten, in denen die Schaltschwellen von den Feldstärkeänderungen durchlaufen werden.

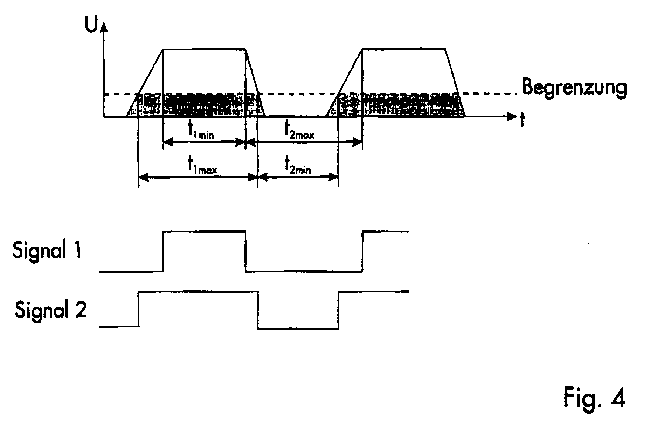

Fig. 4 zeigt ein Zeitdiagramm mit einer Auswertung der Impulslänge. Es sind hier zwei mögliche Fälle dargestellt. Das Signal 1 ergibt sich, wenn das Erreichen und Verlassen der maximalen Feldstärke bzw. Spannung am Transponderschwingkreis von dem Transponder korrekt erkannt wird. Signal 2 hingegen ergibt sich, wenn derselbe Spannungsverlauf am Transponderschwingkreis begrenzt wird. Signal 1 könnte sich aber auch mit Spannungsbegrenzung ergeben, und zwar dann, wenn die maximale Feldstärke oder Spannung gerade mit der Schaltschwelle der Spannungsbegrenzung zusammenfällt. Signal 1 und Signal 2 enthalten die gleiche Information, könnten aber unterschiedlich interpretiert werden.

Die Impulszeiten müßten daher für eine ausreichende Unterscheidbarkeit verschiedener logischer Zustände so gewählt werden, daß die möglichen Verzerrungen den Informationsinhalt der übertragenen Daten nicht verändern. Das bedeutet bei der Übertragung von zwei logischen Zuständen, daß die Differenz der Impulszeiten der beiden Signale größer als t1ₘₐₓ- t1ₘᵢₙ bzw. t2ₘₐₓ - t2ₘᵢₙ gewählt werden muß.

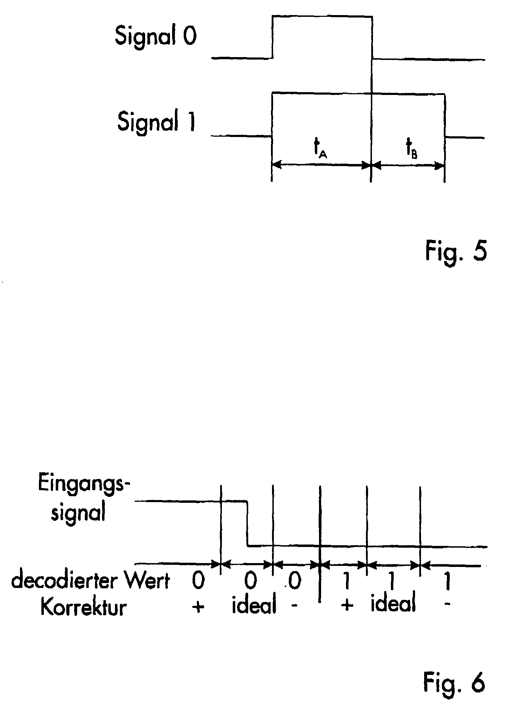

Bei der erfindungsgemäßen Lösung wird zu Beginn der Datenübertragung ein Impuls mit bekannter Dauer vom Schreib-Lesegerät an den Transponder gesendet. Dieser mißt die Impulsdauer aus und kalibriert den Dekoder mit dem gemessenen Wert. Alle folgenden Impulszeiten werden nun aufgrund dieses Korrekturwertes bewertet. Da während der Dauer der Datenübertragung die Kopplung zwischen Schreib-Lesegerät und Transponder schwanken kann, verändern sich auch die empfangenen Impulszeiten. Damit muß die Kalibration nachgeführt werden. Da die Differenz zwischen den Impulszeiten unterschiedlicher logischer Zustände konstant ist, wirken sich die Verzerrungen der Impulszeiten nur auf die absoluten Zeiten aus, nicht aber auf deren Differenzen. Fig. 5 zeigt dazu zwei unterschiedlich Signale 0 und 1. Die Signale bestehen aus einem konstanten Anteil t_{A} und einem Anteil t_{B}, der als Unterscheidungsmerkmal zwischen beiden Signalen dient. Von den möglichen Verzerrungen ist nur der Anteil t_{A} betroffen. Daher muß zur Korrektur und Kompensation nur eine Zeit bestimmt werden, die von allen eingehenden Impulszeiten subtrahiert oder auf die eingehenden Impulszeiten addiert wird, um die Verzerrungen zu kompensieren.

Für die unterschiedlichen Informationen, z. B. bei binärer Datenübertragung 0 und 1, werden nach der Kompensation bestimmte Zeiten erwartet. Stimmen die empfangenen Impulszeiten nicht mehr mit den erwarteten Idealwerten überein, muß der Kompensationswert angepaßt werden. Die Anpassung kann durch Bildung der Differenz zwischen empfangener Zeit und Idealwert erfolgen oder durch einfaches Erhöhen oder Erniedrigen des Kompensationswertes um einen Schritt.

Fig. 6 zeigt dazu ein Zeitdiagramm mit Zeitfenstern zur Auswertung von Feldstärkeänderungen durch Klassifikation eines Eingangsimpulses und Ableitung eines Korrekturwertes. Die Flanke des Beispielimpulses fällt in dem Bereich 0 zu einem idealen Zeitpunkt. Der Impuls wird in Abhängigkeit von der Dauer als 0 oder 1 dekodiert. Dabei sind Grenzen eines mittleren Zeitfensters für ideal liegende Feldstärkeänderungen durch zulässige Toleranzwerte gebildet, die symmetrisch zu dem voraussichtlichen Zeitpunkt der Feldstärkeänderung festgelegt werden. Eine geringe Veränderung der Impulszeit führt daher nicht zu einer Fehlinterpretation. Liegt die Impulszeit außerhalb eines Idealwertes, wird eine Anpassung des Korrekturwertes durchgeführt. In den mit + markierten Fenstern muß der Korrekturwert so verändert werden, daß die zu bewertende Impulszeit länger ausfällt, in den mit - markierten Fenstern entsprechen umgekehrt.

Bei der praktischen Ausführung dieses Verfahrens kann der Zeitbereich für die ideale Impulsbreite auch zu 0 gewählt werden, um den Schaltungsaufwand zu reduzieren.

## Patentansprüche

1. Verfahren zur Datenübertragung zwischen einem Schreib-Lesegerät und einem Transponder durch Feldstärkeänderung eines elektromagnetischen oder magnetischen Feldes und Auswertung der Zeiten zwischen aufeinanderfolgenden Feldstärkeänderungen, dadurch gekennzeichnet, daß zumindest zu Beginn einer Datenübertragung eine systematische Zeitabweichung vom Sollwert, die beim Durchlaufen einer Schaltschwelle der Feldstärkeänderungen auftritt, ermittelt wird, daraus ein Korrekturwert gewonnen wird und die anschließend erfaßten Zeiten um den Korrekturwert verändert werden.

2. Verfahren nach Anspruch 1, dadurch gekennzeichnet, daß zu Beginn einer Datenübertragung vom Schreib-Lesegerät ein durch zwei Feldstärkeänderungen begrenzter Kalibrierimpuls vorgegebener zeitlicher Länge zum Transponder übertragen wird, daß vom Transponder die Zeitspanne zwischen den Durchläufen der Schaltschwellen der Feldstärkeänderungen ermittelt wird und daß die Differenz zwischen der gemessenen Zeitspanne und dem Sollwert den Korrekturwert oder ein Maß für den Korrekturwert bildet.

3. Verfahren nach Anspruch 1 oder 2, dadurch gekennzeichnet, daß zusätzlich während der Datenübertragung die systematische Zeitabweichung vom Sollwert, die beim Durchlaufen einer Schaltschwelle der Feldstärkeänderungen auftritt, ermittelt wird und der jeweils zuvor gewonnene Korrekturwert aktualisiert wird.

4. Verfahren nach Anspruch 3, dadurch gekennzeichnet, daß bei der Übertragung binärer Daten, bei denen zwei unterschiedliche logische Zustände durch zwei unterschiedliche Zeitspannen zwischen zwei Feldstärkeänderungen dargestellt sind, Zeitfenster auf Feldstärkeänderungen überwacht werden, und in Abhängigkeit desjenigen Zeitfensters, in das eine Feldstärkeänderungen fällt, die Korrekturwerte bestimmt werden.

5. Verfahren nach Anspruch 4, dadurch gekennzeichnet, daß die Zeitfenster nach den mit vorangehenden Korrekturwerten bewerteten voraussichtlichen Feldstärkeänderungen bemessen sind.

6. Verfahren nach Anspruch 4 oder 5, dadurch gekennzeichnet, daß veränderte aktualisierte Korrekturwerte aus dem jeweils vorangegangenen Korrekturwert und einem festen Zeitwert gebildet werden, der zum vorangegangenen Korrekturwert addiert oder davon subtrahiert wird.

7. Verfahren nach Anspruch 5 oder 6, dadurch gekennzeichnet, daß drei Zeitfenster gebildet werden, deren Gesamtbreite kleiner oder gleich der Impulsdauer der logischen Zustände ist, wobei die Grenzen eines mittleren Zeitfensters durch zulässige Toleranzwerte der Feldstärkeänderung gebildet sind, die symmetrisch zu dem voraussichtlichen Zeitpunkt der Feldstärkeänderung festgelegt werden, und zwei weitere Zeitfenster vor und nach dem mittleren Zeitfenster angelegt werden, wobei bei einer im mittleren Zeitfenster eintretenden Feldstärkeänderung der vorangegangene Korrekturwert beibehalten wird und bei einer in einem der anderen Zeitfenster eintretenden Feldstärkeänderung der Korrekturwert erhöht oder erniedrigt wird.

8. Verfahren nach Anspruch 5 oder 6, dadurch gekennzeichnet, daß zwei Zeitfenster gebildet werden, deren Gesamtbreite kleiner oder gleich der Impulsdauer der logischen Zustände ist, wobei als Grenze der voraussichtliche Zeitpunkt einer Feldstärkeänderung festgelegt wird und je nach Zeitfenster, in das die Feldstärkeänderung fällt, der Korrekturwert entweder erhöht oder erniedrigt wird.
